Europäisches Patentamt

European Patent Office

Office européen des brevets

(11) Publication number: **0 349 875**
A2

# EUROPEAN PATENT APPLICATION

(21) Application number: 89111587.5

(22) Date of filing: 26.06.89

(51) Int. Cl.⁴: **C08L 67/00** , **C08L 75/06** ,
//(C08L67/00,75:06),
(C08L75/06,67:00)

(30) Priority: 07.07.88 US 216230

(43) Date of publication of application:
10.01.90 Bulletin 90/02

(84) Designated Contracting States:
DE FR GB IT NL

(71) Applicant: GENERAL ELECTRIC COMPANY
1 River Road
Schenectady New York 12305(US)

(72) Inventor: Liu, Nan-I
1604 Country Club Road No.D
Mt. Vernon Indiana 47620(US)

(74) Representative: Catherine, Alain
General Electric France Service de Propriété
Industrielle 18 Rue Horace Vernet
F-92136 Issy-Les-Moulineaux Cedex(FR)

(54) Paintable elestomeric compositions.

(57) The paintable thermoplastic elastomeric molding composition having excellent physical properties, which comprise a copolyetherester resin modified with at least one poly(ester-urethane).

EP 0 349 875 A2

## PAINTABLE ELASTOMERIC COMPOSITIONS

The present invention relates to novel thermoplastic elastomeric molding compositions. The compositions of the present invention exhibit excellent physical properties and paintability.

## BACKGROUND TO THE INVENTION

Copolyetheresters are well known and have enjoyed continued and increasing commercial success. They are available from several sources including the Hytrel® resins from E. I. DuPont and the GAFLEX® resins from GAF Corporation and are described in U.S. Patent Nos. 3,023,192; 3651,014; 3,763,109; 3,766,146; 3,784,520; 3,801,547; 4,156,774; 4,264,761 and 4,355,155, among others; all incorporated herein by reference. These are especially useful resins because they are quite varied in consistency ranging from a soft elastomer to semi-rigid plastics. As such, and because of their overall good physical properties, including superior tear strength, flex life, heat resistance, toughness, and the like, they are widely useful in many different applications. They are capable of being molded into various articles by conventional plastic molding techniques including injection molding, blow molding, profile extrusion, rotomolding, and the like. Because of these properties, these compounds are suitable for uses such as in the automobile industry where they may be utilized in automobile bumpers. It is for such applications that it is desirable that these materials be paintable. Therefore, it would be desirable to modify these copolyetherester materials so that they retain their desirable physical properties and are also readily paintable.

It has now been surprisingly discovered that the paintability of these polymeric elastomers can be substantially improved by adding to such elastomers a poly(ester-urethane) elastomer.

## SUMMARY OF THE INVENTION

In accordance with the present invention there are provided paintable thermoplastic elastomeric compositions that have superior physical properties which compositions comprise:

(A) One or more thermoplastic elastomeric copolyetheresters; and

(B) At least one poly(ester urethane).

## DETAILED DESCRIPTION OF INVENTION

Suitable thermoplastic copolyetheresters(A) for use in this invention include both random and block copolymers. In general, these are prepared by conventional esterification/polycondensation processes from (a) one or more diols, (b) one or more dicarboxylic acids, (c) one or more long chain ether glycols, and optionally, (d) one or more caprolactones or polycaprolactones.

Diols(a) which can be used in the preparation of the copolyetheresters include both saturated and unsaturated aliphatic and cycloaliphatic dihydroxy compounds as well as aromatic dihydroxy compounds. These diols are preferably of a low molecular weight, i.e. having a molecular weight of about 300 or less. When used herein, the term "diols" and "low molecular weight diols" should be construed to include equivalent ester forming derivatives thereof, provided, however, that the molecular weight requirement pertains to the diol only and not to its derivatives. Exemplary of ester forming derivatives there may be given the acetates of the diols as well as, for example, ethylene oxide or ethylene carbonate for ethylene glycol.

Preferred saturated and unsaturated aliphatic and cycloaliphatic diols are those having from about 2 to about 19 carbon atoms. Exemplary of these diols there may be given ethylene glycol; propanediol; butanediol; pentanediol; 2-methyl propanediol; 2,2-dimethyl propanediol; hexanediol; decanediol; 2-octyl undecanediol; 1,2-, 1,3- and 1,4- dihydroxy cyclohexane; 1,2-, 1,3- and 1,4-cyclohexane dimethanol; butanediol; hexenediol, etc. Especially preferred are 1,4-butanediol and mixtures thereof with hexanediol or butenediol.

Aromatic diols suitable for use in the preparation of the thermoplastic elastomers are generally those having from 6 to about 19 carbon atoms. Including among the aromatic dihydroxy compounds are resorcinol; hydroquinone; 1,5-dihydroxy naphthalene; 4,4'-dihydroxy diphenyl; bis(p-hydroxy penyl)methane and 2,2-bis(p-hydroxy phenyl) propane.

Especially preferred are the saturated aliphatic diols, mixtures thereof and mixtures of a saturated diol-(s) with an unsaturated diol(s), wherein each diols contains from 2 to about 8 carbon atoms. Where more than one diol is employed, it is preferred that at least about 60 mole %, most preferably at least 80 mole %, based on the total diol content, be the same diol. As mentioned above, the preferred thermoplastic elastomers are those in which 1,4-butanediol is present in a predominant amount.

Dicarboxylic acids (b) which are suitable for use in the preparation of the copolyetheresters include aliphatic, cycloaliphatic, and/or aromatic dicarboxylic acids. These acids are preferably of a low molecular weight, i.e., having a molecular weight of less than about 350; however, higher molecular weight dicarboxylic acids, especially dimer acids, may also be used. The term "dicarboxylic acids" as used herein, includes equivalents of dicarboxylic acids having two functional carboxy groups which perform substantially like dicarboxylic acids in reaction with glycols and diols in forming polyester polymers. These equivalents include ester and ester-forming derivatives, such as acid halides and anhydrides. Additionally, the dicarboxylic acids may contain any substituent group(s) or combinations which do not substantially interfere with the polymer formation and use of the polymer in the practice of this invention.

Aliphatic dicarboxylic acids, as the term is used herein, refers to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl goups each of which is attached to a carbon atom in an isolated or fused benzene ring system. It is not necessary that both functional carboxy groups be attached to the same aromatic ring and where more than one ring is present, they can be joined by aliphatic or aromatic divalent radicals or divalent radicals such as -O- or -SO$_2$-.

Representative aliphatic and cycloaliphatic acids which can be used are sebacic acid, 1,2-cyclohexane dicarboxylic acid, 1,3-cyclohexane dicarboxylic acid, 1,4-cyclohexane dicarboxylic acid, adipic acid, glutaric acid, succinic acid, oxalic acid, azelaic acid, diethymalonic acid, allylmalonic acid, dimer acid, 4-cyclohexane-1,2- dicarboxylic acid, 2-ethylsuberic acid, tetramethylsuccinic acid, cyclopentane dicarboxylic acid, decahydro-1, 5-napthalene dicarboxylic acid, 4,4'- bicyclohexyl dicarboxylic acid, decahydro-2,6-napthalene dicarboxylic acid, 4,4 methylenebis-(cyclohexane carboxylic acid), 3,4-furan dicarboxylic acid, and 1,1-cyclobutane dicarboxylic acid. Preferred aliphatic acids are cyclohexane dicarboxylic acids, sebacic acid, dimer acid, glutaric acid, azelaic acid and adipic acid.

Representative aromatic dicarboxylic acids which can be used include terephthalic, phthalic and isophthalic acids, bi-benzoic acid, substituted dicarboxy compounds with two benzene nuclei such as bis(p-carboxyphenyl) methane, oxybis(benzoic acid), ethylene-1,2-bis-(p-oxybenzoic acid), 1,5-napthalene dicarboxylic acid, 2,6-napthalene dicarboxylic acid, 2,7-napthalene dicarboxylic acid, phenanthrene dicarboxylic acid, anthracene dicarboxylic acid, 4,4'-sulfonyl diberzoic acid, and halo and C$_1$-C$_{12}$ alkyl, alkoxy, and aryl ring substitution derivatives thereof. Hydroxy acids such as p( -hydroxyethoxy)benzoic acid can also be used provided an aromatic dicarboxylic acid is also present.

Preferred dicarboxylic acids for the presentation of the copolyetheresters are the aromatic dicarboxylic acids, mixtures thereof and mixtures of one or more dicarboxylic acid with an aliphatic and/or cycloaliphatic dicarboxylic acid, most preferably the aromatic dicarboxylic acids. Among the aromatic acids, those with 8-16 carbon atoms are preferred, particularly the benzene dicarboxylic acids, i. e. phthalic, terephthalic and isophthalic acids and their dimethyl derivatives. Especially preferred is dimethyl terephthalate.

Finally, where mixtures of dicarboxylic acids are employed, it is preferred that at least about 60 mole %, preferably at least about 80 mole %, based on 100 mole % of dicarboxylic acid (b) be of the same dicarboxylic acid or ester derivative thereof. As mentioned above, the preferred copolyetheresters are those in which dimethylterephthalate is the predominant dicarboxylic acid.

Suitable long chain ether glycols (c) which can be used in the preparation of the thermoplastic elastomers are preferably poly(oxyalkylene)glycols and copoly(oxyalkylene)glycols of molecular weight of from about 400 to 12000. Preferred poly(oxyalkylene) units are derived from long chain ether glycols of from about 900 to about 4000 molecular weight and having a carbon-to-oxygen ratio of from about 1.8 to about 4.3, exclusive of any side chains.

Representative of suitable poly(oxyalkylene)-glycols are poly(ethylene ether)glycol; poly(propylene ether)glycol; poly(tetramethylene ether)glycol; randon or block copolymers of ethylene oxide and propylene oxide, including ethylene oxide end capped poly(propylene ether)glycol and predominately poly(ethylene ether)backbone, copoly(propylene ether-ethylene ether)glycol; and random or block copolymers or tetrahydrofuran with minor amounts of a second monomer such as ethylene oxide, propylene oxide, or methyltetrahydrofuran (used in proportions such that the carbon-to-oxygen ratio does not exceed about 4.3). Polyformal glycols prepared by reacting formaldehyde with diols such as 1,4-butanediol and 1,5-pentanediol are also useful. Especially preferred poly(oxyalkylene)glycols are poly(propylene ether)-glycol, poly-(tetramethylene ether)glycol and predominately poly(ethylene ether) backbone copoly(propylene ether-ethylene ether)glycol.

Optionally, these copolyetheresters may have been incorporated therein one or more caprolactones or polycaprolactones.

Caprolactones (d) suitable for use herein are widely available commercially, e.g., from Union Carbide Corporation and Aldrich Chemicals. While epsilon caprolactone is especially preferred, it is also possible to use substituted caprolactones wherein the epsilon caprolactone is substituted by a lower alkyl group such as a methyl or ethyl group at the alpha, beta, gemma, delta or epsilon positions. Additionally, it is possible to use polycaprolactone, including homopolymers and copolymers thereof with one or more components, as well as hydroxy terminated polycaprolactone, as block units in the novel copolyetheresters of the present invention. Suitable polycaprolactones and processes for their productions are described in, for example, U.S. Pat. Nos. 3,761,511; 3,767,627, and 3,806,495 herein incorporated by reference.

In general, suitable copolyetheresters elastomers(A) are those in which the weight percent of (c) long chain ether glycol component or the combined weight percent (c) long chain ether glycol component and (d) caprolactone component in the copolyetherester is from about 5 to about 70 weight percent. Preferred compositions are those wherein the weight percent of (c) or (c) and (d) is from about 10 to about 50 weight percent. Where both (c) long chain ether glycol and (d) caprolactone are present, each will comprise from about 2 to about 50 percent by weight, preferably from about 5 to about 30 percent by weight, of the copolyetheresters.

As described above, the copolyetheresters may be prepared by conventional esterification/condensation reactions for the production of polyesters. Exemplary of the processes that may be practiced are as set forth in, for example, U.S. Pat. Nos. 3,023,192; 3,763,109; 3,651,014; 3,663,653 and 3,801,547, herein incorporated by reference. Additionally, these compositions may be prepared by such processes and other known processes to effect random copolymers, block copolymers or hybirds thereof wherein both random and block units are present. For example, it is possible that any two or more of the foregoing monomers/reactants may be prereacted prior to polymerization of the final copolyetheresters. Alternatively, a two-part synthesis may be employed where in two different diols and/or dicarboxylic acids are each prereacted in separated reactors to form two low molecular weight prepolymers which are then combined with the long chain ether glycol to form the final tri-block copolyetheresters.

The foregoing thermoplastic elastomers (A) are modified to render them paintable in accordance with the teachings of the instant invention by admixing therewith a modifying amount of at least one poly(ester-urethane)elastomer. The thermoplastic poly(ester-urethane) is the product of a reaction of a polyester and an aromatic or aliphatic isocyanate.

The term "modifying amount", when used in reference to the amount of poly(ester urethane), refers to that amount of poly(ester urethane) which serves to modify the copolyetherester composition of the present invention to the extent that there is an improvement in the paintability of the resulting compositions without there being a significant increase in the desirable physical properties of the resulting compositions.

Generally, any amount of poly(ester-urethanes) will serve to favorably so modify the copolyetherester composition, although preferably such compositions will contain about 5 to about 95 percent by weight, based on the total weight of the copolyetheresters, and most preferably about 10 to about 30 percent by weight of at least one poly(ester-urethane) in said compositions.

The thermoplastic poly(ester-urethane preferably utilized in the present invention are the reaction product obtained by heating a mixture comprising as essential polyesterurethane forming materials:

(1) one mole of an essentially linear hydroxyl terminated polyester of a saturated, aliphatic glycol having from 2 to 10 carbon atoms and having hydroxyl groups on its terminal carbon atoms and a material selected from the group consisting of a dicarboxylic acid of the formula HOOC-R-COOH where R is an alkylene radical containing from 2 to 8 carbon atoms and its anhydride, said polyester having an average molecular weight between 600 and 1200 and having an acid number less than 10; and

(2) from about 1.1. to 3.1 moles of diphenyl diisocyanate having an isocyanate group of each phenyl nucleus in the presence of from about 0.1 to 2.1 moles of a saturated aliphatic free glycol containing from 2 to 10 carbon atoms and having hydroxyl groups on its terminal carbon atoms.

The preferred poly(ester-urethanes) are those which are the reaction product of

(1) one mole of an essentially hydroxyl terminated poly(tetramethylene adipate) having a molecular weight of from about 700 to 1100 and an acid number of less than 5 and containing;

(2) from about 0.6 to about 1.1. moles of a free glycol of the formula (HO(CH$_2$)$_x$OH wherein x is a number from 4 to 8, said polyester and said free glycol having a combined hydroxy number of between about 40° and 250°; and (3) from 1.6 to 2.1. moles of a diphenyl diisocyanate having an isocyanate group of each phenyl nucleus, the combined molar amount of said polyester and said free glycol being essentially equivalent to the molar amount of said diisocyanate whereby there are essentially no unreacted groups of the class consisting of isocyanate and hydroxyl groups in said reaction product. The basic polyesters that may be employed in preparing the poly(ester-urethane) include those polyesters prepared form the esterification of such dicarboxylic acids as adipic, succinic, pimelic, suberic, azelaic, sebacic and the like or their anhydrides. The preferred acids are those dicarboxylic acids of the formula HOOC-R-COOH, where R is an alkylene radical containing 2 to 8 carbon atoms. More preferred are those represented by the formula HOOC(CH$_2$)$_x$COOH, where x is a number from 2 to 8. Adipic acid is preferred.

The glycols should be straight chain glycols containing between 4 and 10 carbon atoms such as 1,4-butanediol, 1,6-hexamethylenediol, 1,8-octamethylenediol and the like. In general, the glycol is preferably of the formula HO(CH$_2$)$_x$OH, wherein x is 4 to 8. The preferred glycol is 1,4-butanediol.

A free glycol is present in the polyester in an amount from about 0.1 to 2.1 moles, prior to the reaction with the diphenyl diisocyanate. The free glycol preferably is mixed with the polyester prior to reacting the polyester with the diphenyl diisocyanate. If any residual glycol is present in the polyester, this may be utilized as part of the free glycol.

Examples of specific diisocyanates employed to react with the mixture of polyester and free glycol include diphenyl methane diisocyanate, diphenyl methane-p,p'-diisocyanate, dichlorodiphenyl methane diisocyanate, bibenzyl diisocyanate, diphenyl ether diisocyanate and the like. The preferred diphenyl diisocyanates is diphenyl methane p,p'-diisocyanate.

Thermoplastic poly(ester-urethane)elastomers suitable for use herein are described in U.S. Patent No. 2,871,218 which is hereby incorporated by reference.

The instant composition may also optionally contain such commonly known and used additives as oxidative stabilizers; thermal stabilizers, ultraviolet radiation stabilizers; and fillers, and impact modifiers such as (monoalkenyl arene-conjugated diene copolymers;) and polymer resins including poly(butylene terephthalate) or poly(ethylene terephthalate), aromatic polycarbonates; all of which are well known in the art.

The polyester resins utilized include, in general, linear saturated condensation products of diols and dicarboxylic acids, or reactive derivatives thereof. Preferably, they will comprise condensation products of armoatic dicarboxylic acids and aliphatic diols. It is to be understood that it is also possible to use polyesters such as poly(1,4-bimethyl cyclohexane dicarboxylates, e.g., terephthalates). In addition to phthalates, small amounts of other aromatic dicarboxylic acids, or aliphatic dicarboxylic acids, can also be present in preferred compositions. The diol constituent can likewise be varied, in the preferred embodiments, by adding small amounts of cycloaliphatic diols. In any event, the preferred polyesters are well known as film and fiber formers, and the are provided by methods outlines in Whinfield, U.S. 2,465,319 and Pengilly, U.S. 3,047,539 and elsewhere. The preferred polyesters will comprise a poly(alkylene terephthalate, isophthalate or mixed isophthalate-terephthalate, e.g., up to 30 mole percent isophthalate, said alkylene groups containing from 2 to 10 carbon atoms, e.g., poly(ethylene terephthalate) or poly(1,4-butylene terephthalate).

Polycarbonates suitable for use as impact modifiers in the present invention are any of those known in the art. Especially preferred polycarbonates are high molecular weight, thermoplastic, aromatic polymers and include homopolycarbonates, copolycarbonates and copolyestercarbonates and mixtures thereof which have average molecular weights of about 8,000 to more than 200,000, preferably of about 20,000 to 80,000 and an I.V. of 0.30 to 1.0 dl/g as measured in methylene chloride at 25 C. In one embodiment, the polycarbonates are derived from dihydric phenols and carbonate precursors.

Suitable dihydric phenols for producing polycarbonates include, for example,

2,2-bis(4-hydroxyphenyl)propane,

bis(4-hydroxyphenyl) methane,

2,2-bis(4-hydroxy-3-methylphenyl)propane,

4,4-bis(4-hydroxyphenyl) heptane,

2,2-(3,5,3',5'-tetrachloro-4,4'-dihydroxyphenyl)propane,　　2,2-(3,5,3'5'-tetrabromo-4,4'-dihydroxyphenol)-propane, and 3,3'- dichloro-4,4'-dihydroxydiphenyl)methane.

Other dihydric phenols which are also suitable for use in the preparation of the above polycarbonates are disclosed in U.S. Patent Nos. 2,999,835; 3,038,365; 3,334,154; and 4,131,575, incorporated herein by reference.

5

It is, of course, possible to employ two or more different dihydric phenols or a copolymer of a dihydric phenol with a glycol or with a hydroxy or acid terminated polyester, or with a diabasic acid in the event a carbonate copolymer or interpolymer rather than a homopolymer is desired for use in the preparation of the blends of the invention. Blends of any of the above materials can also be employed to provide the aromatic polycarbonate. In addition, branched polycarbonates such as are described in U.S. Patent No. 4,001,184, can also be utilized in the practice of this invention, as can blends of a linear polycarbonate and branched polycarbonate.

The carbonate precursor employed can be either a carbonyl halide, a carbonate ester or a haloformate, and are well known to those skilled in the art.

The polycarbonate may also be a copolyestercarbonate as described by Clayton B. Quinn in U.S. Patent 4,430,484 and Kenneth Miller in U.S. Patent No. 4,465,820. and the references cited therein, incorporated herein by reference.

The polycarbonates of the subject blends can be manufactured by known processes, such as, for example, by reacting a dihydric phenol with a carbonate precursor such as diphenyl carbonate or phosgene in accordance with methods set forth in the above-cited literature and U.S. Patent Nos. 4,018,750 and 4,123,436, or by transesterification processes such as are disclosed in the U.S. Patent No. 3,153,008, as well as other processes known to those skilled in the art. The aromatic polycarbonates are typically prepared by employing a molecular weight regulator, an acid acceptor and a catalyst. The molecular weight regulators which can be employed include phenol, cyclohexanol, methanol, alkylated phenols, such as octylphenol, paratertiary-butyl-phenol, etc.

The acid acceptor can be either an organic or an inorganic acid acceptor. A suitable organic acid acceptor is a tertiary amine. The inorganic acid acceptor can be one which can be either a hydroxide, a carbonate, a bicarbonate, or a phosphate of an alkali or alkaline earth metal.

The catalyst which can be employed are those that typically aid the polymerization of the monomer with phosgene.

Also included are branched polycarbonates wherein a polyfunctional aromatic compound is reacted with the monomer and carbonate precursor to provide a thermoplastic randomly branched polycarbonate. The polyfunctional aromatic compounds contain at least three functional groups which are carboxyl, carboxylic anhydride, haloformyl, or mixture thereof.

The monoalkenyl arene-conjugated diene copolymers suitable for use as impact modifiers in the present composition are selected from ABA type block copolymers and core-shell type copolymers. Further, the term, "monoalkenyl arene-conjugated diene" copolymers is intended to include copolymers having addition comonomers therein as long as both monoalkenyl arene monomers and conjugated diene monomers are each present in an amount of at least about 10 mole present based on total monomer content of the copolymer.

As stated above, suitable block copolymers comprise at least two monoalkenyl arene polymer end blocks A and at least one hydrogenated, partially hydrogenated or non-hydrogenated conjugated diene polymer mid block B, said block copolymer having an 8 to 55 percent by weight monoalkenyl arene polymer block content, each polymer block A having an average molecular weight of between about 5,000 and about 125,000, and each polymer block B having an average molecular weight of between about 10,000 and about 300,000.

These block copolymers may have a variety of geometrical structures, and linear, radial or branched so long as each copolymer has at least two polymer end blocks A and at least one polymer mid block B as defined above. The specific structure of the polymers is determined by their methods of polymerization as is well known in the art.

Various methods for the preparation of the block copolymers are known in the art. For example, such polymers, including processes for the hydrogenation thereof, where desired, are disclosed is U.S. Patent Numbers 3,149,182; 3,595,947; 3,694,523; 3,287,333; 3,321, 635 and 3,842,029, all incorporated herein by reference. In such processes, particular preference is made to the use of lithium based catalysts and especially lithium alkyls for the preparation of the block polymers.

Exemplary of typical species of block copolymers there may be given:
polystyrene-polybutadiene-polystyrene (SBS);
polystyrene-polyisoprene-polystyrene (SIS);
poly(alpha-methylstyrene)-polybutadiene-poly(alpha-methylstyrene); and
poly(alpha-methylstyrene)-polyisoprene-poly(alpha-methylstyrene).

It will be understood that both block A and B may be either homopolymer or random copolymer blocks as long as each block predominates in at least one class of the monomers characterizing the blocks and as long as the A block individually predominate in monoalkenyl arenes and the B blocks individually

6

predominate in dienes. The term "monoalkenyl arene" will be taken to include especially styrene and its analogs and homologs including alpha-methylstyrene and ring-substituted styrenes, particularly ring-methylated styrenes. The preferred monoalkenyl arenes are styrene and alpha-methylstyrene, and styrene is particularly preferred. The B blocks may comprise homopolymers of butadiene or isoprene and copolymers of one of these two dienes with a monoalkenyl arene as long as the B blocks predominate in conjugated diene units. When the monomer employed is butadiene, it is preferred that between about 35 and about 55 mole percent of the condensed butadiene units in the butadiene polymer block have 1,2 configuration. Thus, when a hydrogenated or partially hydrogenated block copolymer is desired, it is or has segments which are or resemble a regular copolymer block of ethylene and butene-1 (EB). If the conjugated diene employed is isoprene, the resulting hydrogenated product is or resembles a regular copolymer block of ethylene and propylene (EP).

When hydrogenation of the block copolymer is desired, it may be and is preferably effected by use of a catalyst comprising the reaction products of an aluminum alkyl compound with nickel or cobalt carboxylates or alkoxides under such conditions as to preferably substantially completely hydrogenate at least 80% of the aliphatic double bonds while hydrogenating no more than about 25% of the alkenyl arene aromatic double bonds. Preferred hydrogenated block copolymers are those where at least 99% of the aliphatic double bonds are hydrogenated while less than 5% of the aromatic double bonds are hydrogenated.

The average molecular weights of the individual blocks may vary within certain limits. In most instances, the monoalkenyl arene blocks will have number average molecular weights in the order of 5,000-125,000, preferably 7,000-60,000, while the conjugated diene blocks either before or after hydrogenation will have average molecular weights in the order of 10,000-300,000, preferably 30,000-150,000. The total average molecular weight of the block copolymer is typically in the order of 25,000 to about 350,000, preferably from about 35,000 to about 300,000.

The proportion of the monoalkenyl arene blocks should be between about 8 and 55% by weight of the block copolymer, preferably between about 10 and 30% by weight.

The second class of monoalkenyl arene-conjugated diene copolymers are of the core-shell ·type. In general these are characterized as having a predominately conjugated diene rubbery core and one or more shells graft polymerized thereon and derived from monoalkenyl arene monomers alone or, preferably, in combination with other vinyl monomers.

More particularly, the first or core phase of the core-shell copolymer comprises polymerized conjugated diene units of one or more conjugated dienes alone or copolymerized with units of a vinyl monomer or mixture of vinyl monomers. The core of said copolymer should comprise at least about 50 percent by weight of the conjugated diene. Preferred grafted core-shell copolymers for use herein comprise a core of polybutadiene homopolymer or a styrene-butadiene copolymer comprising about 10 to 50% by weight styrene and about 90 to 50% by weight of butadiene, having a molecular weight of from about 150,000 to about 500,000. The core phase may also include a cross-linking monomer, more particularly described below.

The final or shell phase of the copolymer comprises polymerized units of a monoalkenyl arene alone or copolymerized with one or more other vinyl monomers wherein at least 10 mole percent of the graft component is derived from the monoalkenyl arene monomer.

Optionally, the core-shell copolymers may further comprise one or more cross-linked or non-cross linked intermediate layers which is grafted to the core and upon which the final shell layer is grafted, comprising of one or more polymerized vinyl monomer.

As mentioned each of the individual stages of the core-shell copolymers may contain a cross-linking monomer which may serve not only to cross-link the units of the individual layers but also graft-link the shell to the core. As the cross-linking agent for use in preparation of the core-shell copolymers, those which copolymerize smoothly with the monomer in the respective stages of the reaction should be selected. Representative cross-linking agents including, but are not limited to aromatic polyfunctional vinyl compounds such as divinyl benzene, trivinyl benzene, divinyl toluene and the like; di- and tri-methacrylates and di and triacrylates of polyols represented by monoethylene-, diethylene- and triethylene glycols, 1,3-butanediol and glycerin allyl esters of unsaturated aliphatic carboxylic acid such as allyl acrylate, allyl methacrylate and the like and di- and triallyl compounds such as diallyl phthalate, diallyl sebacate, triallytriazine and the like are mentioned.

While the amount of cross-linking agent employed is from about 0.01 to 3.0% by weight based on the monomer charge for each stage of the reaction, generally, the total amount of cross-linking agent in the final graft copolymer will preferably be less than 3.0 weight percent.

The core-shell copolymers suitable for use herein generally comprise from about 50 to about 90 weight percent of the core and from about 10 up to 50 weight percent of the graft or shell phase. Where an intermediate phase or layer is present in the graft copolymer the shell and intermediate phase will each comprise from about 5 to about 25 weight percent of the copolymer.

The core-shell graft copolymers for use in the present invention are prepared by the conventional method of emulsion polymerization or in a alternative method, graft copolymerization.

Specific examples of suitable core-shell graft copolymers and the production thereof are disclosed in for example U.S. Patent Numbers 4,180,494 and 4,292,233; herein incorporated by reference. Commercially available grafted core-shell copolymers for use herein include the KM653 and KM611 from Rohm and Haas Chemical Company.

Many of the oxidative and/or thermal stabilizers known in the art for copolyesters may be used in the practice of the present invention. These may be incorporated either during polymerization or while in a hot melt stage following polymerization. Satisfactory stabilizers of this type include the phenols and their derivatives, compounds containing both hydroxyl and amine groups, hydroxyazines, oximes, polymeric phenolic esters, and salts of multivalent metals in which the metal is in its lower valence state. Some specific examples of these stabilizers are described in U.S. Patent No. 4,556,688, incorporated herein by reference.

The ultraviolet radiation stabilizers include, but are not limited to, the benzophenone derivatives, benzotriazole derivatives, and cyanoacrylates.

The fillers include, but are not limited to, carbon black, silica gel, alumina, clay, talc, and chopped fiberglass or glass particles. These fillers may be incorporated in amounts up to about 50 weight percent, preferably up to about 30 weight percent.

The compositions of the present invention may be prepared by any of the well-known techniques for preparing the polymer blends or add mixtures, with extrusion blending being preferred. Suitable devices for the blending include single screw extruders, twin screw extruders, internal mixers such as the Bambury Mixer, heated rubber mills (electric of oil heat) or Farrell continuous mixers. Injection molding equipment can also be used to accomplish blending just prior to molding, but care must be taken to provide sufficient time and agitation to insure uniform blending prior to molding.

Alternatively, the ingredients may be dry blended prior to extrusion or injection molding.

## DESCRIPTION OF THE PREFERRED EMBODIMENT

The following examples are presented to more fully and clearly illustrate the present invention. They are presented as illustrative of the invention and are not to be construed as limiting the invention thereto. In the examples all parts and percentages are on a weight basis unless otherwise specified.

All compositions were prepared by melt blending the thermoplastic elastomer with the thermoplastic polyester in a Prodex single screw extruder.

Physical properties of these compositions were determined in accordance with ASTM methods as follows:

| Notched Izod | ASTM D256 |
|---|---|
| Flexural Modulus | ASTM D790 |
| Tensile Strength | ASTM D638 |
| Tensile Elongation | ASTM D638 |

The paint studies were conducted as follows:

6" x 8" painted polyetherimide ester panels were immersed in a water tank for 4 hours at 100°F ( 2°F). (The tank was constantly aerated during this procedure.) After 4 hours the panels were removed from the tank and immediately were placed in a freezer at -20°F. After 4 hours, the panels were removed from the freezer and an "X" was transcribed on the panels, through the paint and into the base materials. Immediately thereafter the panels were placed on a suitable rack and a steam blast was directed at the inscribed lines for a minimum of 30 seconds in an attempt to remove the paint film. The steam was generated using a model 60 Steam Generator from the Atomic Steam Company, Detroit, Michigan, using a 3/8" iron pipe nozzle. The steam was pumped at the rate of 60 gal./hr. at a pressure of 95 psi + 5 psi and had an approximate heat input of 250,000 BTU/hr.

The paint utilized in the Examples was a two component urethane based Red Spot 206 paint, Red Spot Paint Company, Evansville, Indiana.

Example 1 (with Example 2 being the control), indicates the compatability of the copolyetherester resins with the thermoplastic poly(ester-urethane)resins and poly(1,4 butylene terephthalate).

Table I sets forth the formulations for each of the Examples 1 and 2 and, in addition, sets forth the physical properties of the test pieces realized from each Example. (All proportions are in parts by weight).

Table II sets forth the formulations for Examples 3-8, with Example 3 being the control.

The copolyetherester (PEE) utilized in the Examples 1 and 2 had a modulus of 25,000. The thermoplastic poly(ester-urethane) (TPU) utilized in Example 1 was Estane 58271, from B.F. Goodrich. The stabilizer used in Examples 1 and 2 was Irganox 1010, a hindered phenol stabilizer (tetrakis methylene (3,5-di-t-butyl-4-hydroxy hydrocinnanate). The stablizer used in Examples 3 to 5 was a 40 wt.%-60 wt.% mixture of Irganox 1010 and a phosphate stabilizer. In all the Examples, NB stands for no break. PBT stands for poly(1,4 butylene terephthalate).

TABLE I

| Example | 1 | 2 |
|---|---|---|
| PEE | 59.5 | 79.5 |
| TPU | 20.0 | --- |
| STAB | 0.5 | 0.5 |
| PBT | 20.0 | 20.0 |
| 1/4" Notched Izod, Room Temperature | NB | NB |
| 1/4" Notched Izod, -30°F | NB | 1.2 |
| Flexural Modulus | 48K | 47K |
| Tensile Strength,psi | 3560 | 3500 |
| Tensile Elongation (%) | 520 | 520 |

TABLE II

| | 3 | 4 | 5 | 6 | 7 | 8 |
|---|---|---|---|---|---|---|
| TPU | -- | 10.0 | 30.0 | 50.0 | 70.0 | 90.0 |
| PEE | 99.5 | 89.5 | 69.5 | 69.5 | 29.5 | 9.5 |
| STAB | 0.5 | 0.5 | 0.5 | 0.5 | 0.5 | 0.5 |
| 1/8" Notched Izod, RT | NB | NB | NB | NB | NB | NB |
| 1/8" Notched Izod, -30°C | 2.5 | 3.2 | 22.1 | 23.9 | 17.7 | 16.8 |
| Tensile Elongation, psi | 3100 | 3350 | 3400 | 3600 | 5600 | 6400 |
| Tensile Elongation (%) | 400 | 400 | 400 | 770 | 700 | 800 |
| Flexural Modulus | 35000 | 25000 | 21000 | 18000 | 16000 | 13000 |

As can be seen from the above-indicated physical properties, the combination of a copolyetherester and a thermoplastic poly(ester-urethane) is very compatible and, in fact, the combination displays superior properties in a number of the physical tests.

Finally, test samples from Examples 1 through 8 were also subject to the paintability test described above. The test piece from Example 1 and 4 through 8 showed good paint adhesion, whereas the test piece from Examples 2 and 3 displayed poor paint adhesion.

Obviously, other modifications and variations of the present invention are possible in light of the above teachings. It is therefore to be understood that changes may be made in the particular embodiments of the invention described which are within the full intended scope of the invention as defined by the appended claims.

**Claims**

1. A thermoplastic molding composition comprising:
   (A) at least one or more copolyetheresters elastomer; and
   (B) at least one poly(ester-urethane).

9

2. A composition as defined in claim 1 wherein at least one or more copolyetheresters elastomers are derived from:

(a) one or more diols;

(b) one or more dicarboxylic acids or the ester derivatives thereof;

(c) one or more long chain ether glycols having a molecular weight from about 400 to about 12000;

(d) optionally, one or more caprolactones, wherein the long chain ether glycol and caprolactone, if any, comprise from about 5 to about 70 weight percent of the copolyetheresters.

3. The composition of claim 1 wherein the said poly(ester-urethane) is the reaction product of (a) a polyester and (b) an aromatic isocyanate or an aliphatic isocyanate.

4. The composition of claim 3 wherein the poly(ester-urethane) is the reaction product of a polyester and an aliphatic isocyanate.

5. The composition of claim 3 wherein the poly(ester-urethane) is the reaction product of a polyester and an aromatic isocyanate.

6. A composition as defined in claim 5 wherein said thermoplastic poly(ester-urethane) is the reaction product obtained by heating a mixture comprising as essential poly(ester-urethane) forming ingredients (1) one mole of an essentially linear hydroxyl terminated polyester of a saturated, aliphatic glycol having from 2 to 10 carbon atoms and having hydroxyl groups on its terminal carbon atoms and a material selected from the group consisting of a dicarboxylic acid of the formula HOOC-R-COOH where R is an alkylene radical containing from 2 to 8 carbon atoms and its anhydride, said polyester having an average molecular weight between 600 and 1200 and having an acid number less than 10, and (2) from about 1.1 to 3.1 moles of a diphenyl diisocyanate having an isocyanate group of each phenyl nucleus in the presence of from about 0.1 to 2.1 moles of a saturated aliphatic free glycol containing from 4 to 10 carbon atoms and having hydroxyl groups on its terminal carbon atoms.

7. A composition as defined in claim 6 wherein said thermoplastic poly(ester-urethane) is the reaction product of (1) one mole of an essentially hydroxyl terminated poly(tetramethylene adipate) having a molecular weight of from about 700 to 1100 and an acid number of less than 5 and containing (2) from about 0.6 to 1.1 moles of a free glycol of the formula $HO(CH_2)_xOH$ wherein x is a number from 4 to 8, said polyester and said free glycol having a combined hydroxyl number of between about 40 and 250, and (3) from 1.6 to 2.1 moles of a diphenyl diisocyante having an isocyanate group on each phenyl nucleus, the combined molar amount of said polyester and said free glycol being essentially equivalent to the molar amount of said diisocyanate whereby there are essentially no unreacted groups of the class consisting of isocyanate and hydroxy groups in said reaction product.

8. A composition as defined in claim 7 wherein the glycol is 1,4-butanediol.

9. A composition as defined in claim 8 wherein the diphenyl diisocyanate is diphenyl methane p,p'-diisocyanate.

10. The composition of claim 1 wherein the poly(ester-urethane) comprises from about 5 to about 95 percent by weight of the total weight of the poly(ester-urethane) and the copolyether ester elastomer.

11. The composition of claim 10 wherein the poly(ester-urethane) comprises from about 10 to about 30 percent by weight of the total weight of the poly(ester-urethane) and the copolyether ester elastomer.

12. The composition of claim 1 wherein the copolyetherester elastomer is derived from:

(a) one or more $C_2$ to $C_{19}$ aliphatic or cycloaliphatic diols;

(b) one or more $C_4$ to $C_{36}$ dicarboxylic acids;

(c) one or more poly(alkylene ether)glycols having a molecular weight of from about 900 to about 4000, and

(d) optionally, one or more caprolactones, wherein:

(i) at least 60 mole percent of the diols are the same;

(ii) at least 60 mole percent of the dicarboxylic acids are the same; and

(iii) the combined amount of long chain ether glycol and caprolactone, if any, in the copolyetheresters is from about 10 to about 50 weight present.

13. The composition of claim 12 wherein at least about 80 mole percent of the diols and at least about 80 mole persent of the dicarboxylic acids are the same.

14. The composition of claim 12 wherein the predominant dicarboxylic acid is dimethylterephthalate.

15. The composition of claim 12 wherein the poly(alkylene ether)glycol is selected from the group consisting of poly(ethylene ether)glycol, poly(propylene ether)glycol, poly(tetramethylene ether)glycol and copoly(propylene ether-ethylene ether)glycol.

16. The composition of claim 12 wherein the poly(alkylene ether) glycol is poly(tetramethylene ether)-glycol.

17. The composition of claim 1 wherein the copolyetheresters contains a caprolactone in an amount of from about 2 to about 50 percent by weight.

18. The composition of claim 17 wherein the caprolactone is epsilon caprolactone.

19. The composition of claim 1 which further contains an effective stabilizing amount of at least one thermal stabilizer.

20. The composition of claim 1 which further contains a filler.

21. The composition of claim 1 which further contains at least one resin.

22. The composition of claim 21 wherein the resin is poly(butylene terephthalate).

23. The composition of claim 22 wherein the poly(butylene terephthalate) is poly(1,4-butylene terephthalate).

24. The composition of claim 21 wherein the resin is poly(ethylene terephthalate).

25. The composition of claim 21 wherein the resin is a monoalkenyl arene-conjugated diene rubber copolymer.

26. The composition of claim 25 wherein the monoalkenyl arene-conjugated diene rubber copolymer is a block copolymer.

27. The composition of claim 25 wherein the monoalkenyl arene-conjugated diene rubber copolymer is a core-shell copolymer.

28. The composition of claim 21 wherein the resin is an aromatic polycarbonate resin.

29. The composition of claim 21 wherein the polycarbonate resin is derived from a diphenol and phosgene or a phosgene precursor.